# EUROPÄISCHE PATENTSCHRIFT

(11) **EP 1 099 871 B1**
(45) Veröffentlichungstag und Bekanntmachung des Hinweises auf die Patenterteilung: **22.12.2004**
(21) Anmeldenummer: 00121815.5
(22) Anmeldetag: 05.10.2000
(51) Int. Cl.: F16D 65/092, F16D 65/097

(54) **Bremsbelag, insbesondere Scheibenbremsbelag**
Brake lining, particularly disc brake lining
Garniture de frein, en particulier de frein à disque

(30) Priorität: 11.12.1999 DE 19959911; 05.11.1999 DE 19953529
(43) Veröffentlichungstag der Anmeldung: 16.05.2001
(73) Patentinhaber: MSC/GAC Laminates & Composites GmbH & Co KG, 99826 Buchenau (DE)
(72) Erfinder: Goldbach, Dieter, Dipl.-Ing., 61350 Bad Homburg (DE)
(74) Vertreter: Weiss, Peter, Dr.

(56) Entgegenhaltungen:
- EP-A- 0 138 081
- WO-A-98/32988
- DE-C- 4 142 196
- PATENT ABSTRACTS OF JAPAN vol. 018, no. 432 (M-1654), 11. August 1994 (1994-08-11) -& JP 06 129451 A (AISIN SEIKI CO LTD), 10. Mai 1994 (1994-05-10)

## Beschreibung

Die vorliegende Erfindung betrifft einen Bremsbelag, insbesondere Scheibenbremsbelag zum Einsetzen in Bremssättel von Scheibenbremsanlagen, mit einem einerseits auf einer Rückenplatte festgelegten Belagsmatrix und andererseits angeordnetem Dämpfungsblech, wobei zwischen Dämpfungsblech und Rückenplatte zumindest ein weiteres Blech mit zumindest einer Öffnung vorgesehen ist.

Herkömmliche Bremsbeläge sind in vielfältigster Form und Ausführung auf dem Markt bekannt und erhältlich. Sie werden im wesentlichen in der Fahrzeug- und Automobilindustrie in Scheibenbremsanlagen eingesetzt.

Insbesondere ist bekannt, entsprechende Dämpfungsbleche mit Öffnungen zur Aufnahme von Dämpfungsmittel, wie beispielsweise Fetten, zwischen einem Bremskolben bzw. einem Sattelfinger (Faustseite) und der Rückenplatten der Bremsbeläge einzusetzen.

Dabei liegt der Bremskolben direkt am Dämpfungsblech an bzw. auf der Öffnung zur Aufnahme des Dämpfungsmittels.

Nachteilig ist dabei, dass das Fett durch die Kolbenbewegung entweichen kann, insbesondere bei Entlastung und Lüftungsspiel der Bremsbeläge, so dass ein Dämpfungsverhalten sehr schnell nachlässt.

Die EP 0 138 081 A1 offenbart einen Bremsbelag, welchem ein Dämpfungsblech mit dazwischen eingesetztem Blech zugeordnet ist. Das zusätzliche Blech weist einen horizontalen Schlitz zur Aufnahme von Dämpfungsmitteln auf. Das Dämpfungsblech sowie das zusätzliche Blech sind zueinander bewegbar gelagert.

Die JP-A-6 129 451 offenbart einen Bremsbelag, welcher aus einem Dämpfungsblech und einem Blech mit Öffnung gebildet ist. Die beiden Bleche sind geringfügig zueinander bewegbar.

Die WO 98/32988 beschreibt einen ähnlichen Bremsbelag für eine Teilbelags-Scheibenbremse, bei welcher aus einer Belagsrückenplatte aus einem Dämpfungsblech ein Blech zur Aufnahme von Dämpfungsmitteln vorgesehen ist. Das Blech und das Dämpfungsblech sind über entsprechende Öffnung der Rückenplatte schwimmend zueinander gelagert.

Eine Bremsbacke für eine Teilbelag-Scheibenbremse ist auch aus der DE 41 42 196 beschrieben, wobei eine Halteplatte mit dieser über beweglich vorgesetzten Gleitplatte entsprechende Öffnungen aufweist, die jedoch zu einem Kolben ausgerichtet sind.

Der vorliegenden Erfindung liegt die Aufgabe zugrunde, einen Bremsbelag mit Dämpfungsblech zu schaffen, welcher insbesondere die Dämpfungs- und Federungseigenschaften in axialer und/oder radialer oder tangentialer Betätigungsrichtung beim Bremsen erheblich verbessert, wobei auch Geräusche beim Bremsen insbesondere Schwingungsgeräusche abgebaut oder reduziert werden sollen. Zudem soll eine entsprechende Lagerung axial und/oder radial erheblich verbessert werden.

Zur Lösung dieser Aufgabe führt, dass Dämpfungsblech und Blech fest miteinander verklebt sind und durch eine Mehrzahl von Öffnungen und durch festes Verbinden des Dämpfungsbleches mit dem Blech eine Mehrzahl von Aufnahmeräumen für Dämpfungsmittel gebildet ist.

Bei der vorliegenden Erfindung ist einem im wesentlichen als Deckblech ausgebildetes Dämpfungsblech ein weiteres Blech zugeordnet, in welchem eine Vielzahl von Öffnungen zur Aufnahme von Dämpfungsmittel, insbesondere Fett vorgesehen sind. Dabei sind Dämpfungsblech und das Blech mit den entsprechenden Öffnungen fest miteinander verklebt, bzw. so miteinander fixiert, dass eine Relativbewegung radial und/oder tangential zwischen den beiden Blechen auftreten kann. Insbesondere im Bereich der Öffnungen im Blech ist das Dämpfungsblech geschlossen ausgebildet, so dass ein Aufnahmeraum für das Dämpfungsmittel entsteht.

Dabei können die Öffnungen sternartig, insbesondere schlitzartig im Blech vorgesehen sein. Diese können schräg, waagrecht, senkrecht verteilt angeordnet sein. Ferner können diese auch unterschiedliche Formen aufweisen. Hier sei der Erfindung keine Grenze gesetzt.

Dieses Blech liegt mit zumindest einem Aufnahmeraum für das Dämpfungsmittel bspw. direkt an der Rückenplatte des Bremsbelages an und gewährleistet auf diese Weise eine schwimmende, radial und/oder axial entkoppelte Lagerung im Bremsbetrieb. Insbesondere werden beim Bremsen, d. h. beim Beaufschlagen des Dämpfungsbleches mittels des Bremskolbens bzw. der Sattelfinger (Faustseite) und somit des mit den Öffnungen versehenen Bleches auf die Rückenplatte des Bremsbelages axial und/oder radiale und/oder tangentiale Schwingungen abgebaut.

Hierdurch können reibungsinduzierte Geräusche beim Betätigen einer Bremse, insbesondere durch die Bremsscheibe, Bremssattel und Bremsbelag reduziert werden. Somit können ferner Schwingungen reduziert werden, die infolge von Geometriefehlern der Bremsbestandteile, insbesondere der Bremsscheibe beim Bremsvorgang auftreten.

Ein weiterer Vorteil der vorliegenden Erfindung ist die Entkopplung des axialen und/oder radialen bzw. tangentialen Schwingungssystems durch die Verringerung der Reibkräfte zwischen Kolben bzw. Sattelfinger und der Rückenplatte des Bremsbelages. Dies wird erreicht durch die schwimmende Lagerung zwischen beiden Blechen oder dem Blech und der Rückenplatte.

Im Rahmen der vorliegenden Erfindung soll auch liegen, das Dämpfungsblech sowie das Blech mit den entsprechenden Öffnungen einstückig aus einem Bauteil bzw. Blech herzustellen, wobei dann die entsprechenden Öffnungen bzw. Aufnahmeräume, beispielsweise durch Fräsen oder Feinstanzen, insbesondere als taschenartige Hohlräume vorgesehen sein können, die dann entsprechend zur Rückenplatte angeordnet sind, oder sich auf dieser befinden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf ein herkömmliches Dämpfungsblech;
Figur 2 eine schematisch dargestellte Seitenansicht auf einen erfindungsgemässen Bremsbelag mit Blech und Dämpfungsblech;
Figuren 3 bis 5 Draufsichten auf weitere Ausführungsbeispiele von Dämpfungsblechen, verbunden mit jeweiligen Blechen.

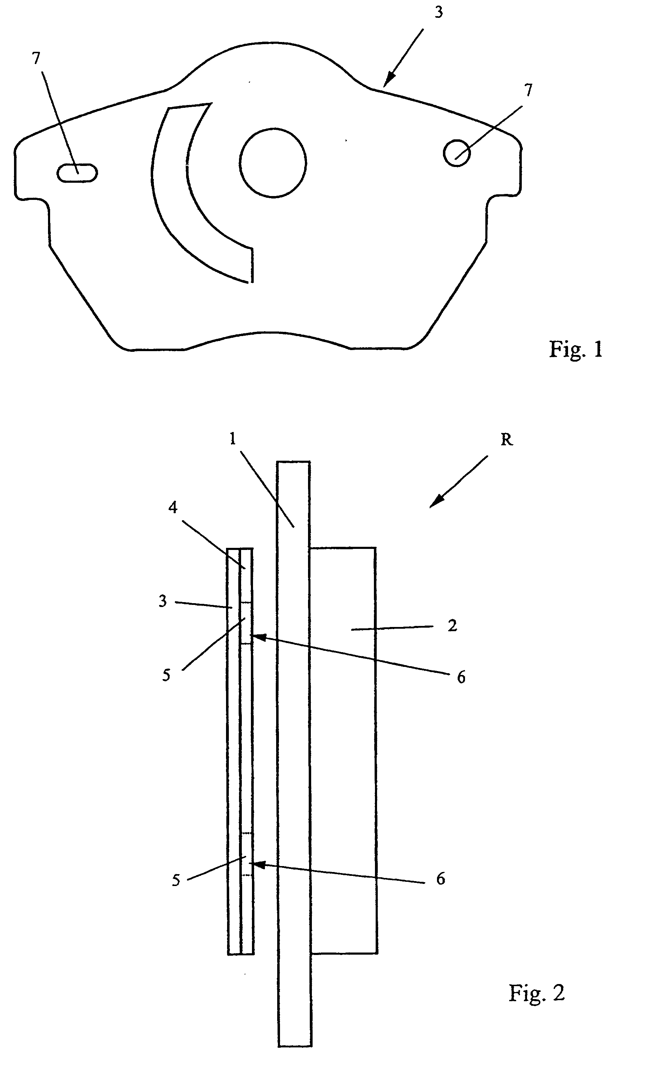

Gemäss Figur 2 weist ein erfindungsgemässer Bremsbelag R eine Rückenplatte 1 auf, auf welcher einerseits eine Belagsmatrix 2, insbesondere Belag aufgeklebt ist. Andererseits ist der Rückenplatte 1 ein Dämpfungsblech 3 mit bevorzugt aufgeklebtem Blech 4 zugeordnet.

Dabei ist von wesentlicher Bedeutung, dass in dem Blech 4 zumindest eine Öffnung 5 vorgesehen, insbesondere eingestanzt ist, die zur Aufnahme von Dämpfungsmittel, insbesondere Fett dient.

Wichtig bei der vorliegenden Erfindung ist ferner, dass das Dämpfungsblech 3, welches vorzugsweise als im wesentlichen geschlossenes Deckblech ausgebildet ist, mit dem Blech 4, welches die entsprechenden Öffnungen 5 enthält, fixiert ist.

Bevorzugt sind Dämpfungsblech 3 und Blech 4 fest miteinander verklebt.

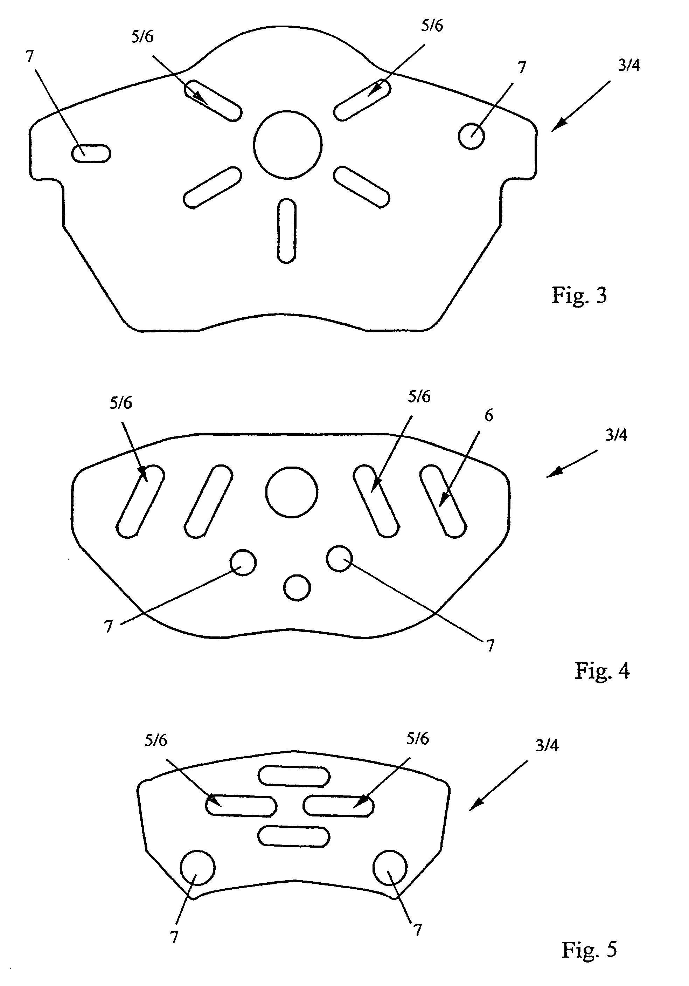

Zumindest in den Bereichen der Öffnungen 5, die schlitzartig ausgebildet sein können, ist das Dämpfungsblech 3 geschlossen, so dass ein Aufnahmeraum 6, wie er insbesondere in den Figuren 3 bis 5 dargestellt ist, entsteht. Entsprechende Halteöffnungen 7 können durchgehend im Dämpfungsblech 3 bzw. Blech 4 vorgesehen sein, um diese beispielsweise an der Rückenplatte 1 des Bremsbelages R axial und radial aufzunehmen bzw. zu lagern, oder bei der Fixierung der Bleche diese genau zu positionieren.

Hierdurch werden Dämpfungsblech 3 sowie Blech 4 schwingend, bzw. schwimmend zwischen der Rückenplatte 1 des Bremsbelages R und einem hier nicht dargestellten Bremskolben gelagert.

In Figur 1 ist ein herkömmliches Dämpfungsblech 3 aufgezeigt, welches eine entsprechende Öffnung aufweist. Dieses herkömmliche Dämpfungsblech 3 wird zwischen Rückenplatte 1 und einem Bremskolben einer Bremszange eingesetzt. Dabei wird durch die Öffnung ein Bremskolben ungleichmässig auf den Belag angedrückt, was ein Dämpfungsverhalten hervorrufen soll.

Bei der vorliegenden Erfindung hingegen ist das Blech 4 mit den entsprechenden Öffnungen 5 mit einem Dämpfungsblech 3 verbunden insbesondere fixiert, so dass einzelne Aufnahmeräume 6 entstehen und insgesamt die beiden miteinander verbundenen Bleche 3, 4 zwischen Rückenplatte 1 und einem Bremskolben eingesetzt werden können. Dabei liegt der Aufnahmeraum 6 bzw. die Öffnung 5 direkt auf der Rückenplatte 1 des Bremsbelages R an und gewährleistet auf diese Weise eine optimale Dämpfung im Betrieb.

Vorzugsweise sind die Schlitze derart angeordnet, dass sie eine möglichst gleichmässige Verteilung des Dämpfungsmittels auf der Rückenplatte 1 gewährleisten.

Ferner soll im Rahmen der vorliegenden Erfindung liegen, dass das Dämpfungsblech 3 mit entsprechenden Aufnahmeräumen 6 versehen sein kann, welche zur Rückenplatte 1 ausgerichtet sind. Dabei sind die Aufnahmeräume 6 zum Bremskolben oder Sattelfinger (faustseitig) bei Einkolbenscheibenbremsen hin geschlossen. Auf diese Weise kann ebenfalls das Dämpfungsmittel, insbesondere das Fett aufgenommen werden.

## Patentansprüche

1. Bremsbelag, insbesondere Scheibenbremsbelag zum Einsetzen in Bremssättel von Scheibenbremsanlagen, mit einem einerseits auf einer Rückenplatte (1) festgelegten Belagsmatrix (2) und andererseits angeordnetem Dämpfungsblech (3), wobei zwischen Dämpfungsblech (3) und Rückenplatte (1) zumindest ein weiteres Blech (4) mit zumindest einer Öffnung (5) vorgesehen ist,
**dadurch gekennzeichnet,**
**dass** Dämpfungsblech (3) und Blech (4) fest miteinander verklebt sind und durch eine Mehrzahl von Öffnungen und durch festes Verbinden des Dämpfungsbleches (3) mit dem Blech (4) eine Mehrzahl von Aufnahmeräumen (6) für Dämpfungsmittel gebildet ist.

2. Bremsbelag nach Anspruch 1, **dadurch gekennzeichnet, dass** eine Mehrzahl von Öffnungen (5) im Blech (4) zur Aufnahme von Dämpfungsmittel, insbesondere Fett, dient.

3. Bremsbelag nach Anspruch 1 oder 2, **dadurch gekennzeichnet, dass** das Dämpfungsblech (3) als Deckblech ausgebildet ist.

4. Bremsbelag nach wenigstens einem der Ansprüche 1 bis 3, **dadurch gekennzeichnet, dass** das mit dem Dämpfungsblech (3) verbundene Blech (4) gegenüber der Rückenplatte (1) axial und/oder radial entkoppelt ist.

5. Bremsbelag nach wenigstens einem der Ansprüche 1 bis 4, **dadurch gekennzeichnet, dass** das mit dem Dämpfungsblech (3) verbundene Blech (4) zumindest eine Halteöffnung (7) zur schwimmenden Lagerung an der Rückenplatte (1) aufweist.

6. Bremsbelag nach wenigstens einem der Ansprüche 1 bis 5, **dadurch gekennzeichnet, dass** die Öffnungen (5) schlitzartig, waagrecht, senkrecht, schräg, sternartig oder rund im Blech (4) vorgesehen sind.

7. Bremsbelag nach wenigstens einem der Ansprüche 1 bis 6, **dadurch gekennzeichnet, dass** das Dämpfungsblech (3) zumindest ein zur Rückenplatte (1) ausgerichteter Aufnahmeraum (6) zur Aufnahme von Dämpfungsmittel aufweist.

## Claims

1. Brake lining, more especially a disk brake lining for inserting in callipers of disk brake systems, said lining having a lining matrix (2) mounted on one side on a back-plate (1) and a sheet metal damping panel (3) disposed on the other side, at least one additional sheet metal panel (4) having at least one opening (5) and being provided between sheet metal damping panel (3) and back-plate (1), **characterised in that** sheet metal damping panel (3) and sheet metal panel (4) are securedly glued together, and a plurality of accommodation chambers (6) for damping means are formed by a plurality of openings and by the fixed connection between the sheet metal damping panel (3) and the sheet metal panel (4).

2. Brake lining according to claim 1, **characterised in that** a plurality of openings (5) in the sheet metal panel (4) serve to accommodate damping means, more especially grease.

3. Brake lining according to claim 1 or 2, **characterised in that** the sheet metal damping panel (3) is in the form of a sheet metal cover panel.

4. Brake lining according to at least one of claims 1 to 3, **characterised in that** the sheet metal panel (4), which is connected to the sheet metal damping panel (3), is axially and/or radially released relative to the back-plate (1).

5. Brake lining according to at least one of claims 1 to 4, **characterised in that** the sheet metal panel (4), which is connected to the sheet metal damping panel (3), has at least one retaining opening (7) for detachable mounting on the back-plate (1).

6. Brake lining according to at least one of claims 1 to 5, **characterised in that** the openings (5) are provided in the sheet metal panel (4) in a slot-like, horizontal, vertical, inclined, star-shaped or circular manner.

7. Brake lining according to at least one of claims 1 to 6, **characterised in that** the sheet metal damping panel (3) has at least one accommodation chamber (6), orientated towards the back-plate (1), for the accommodation of damping means.

## Revendications

1. Garniture de frein, en particulier garniture de frein à disque, destinée à être utilisée dans des carters de frein d'installations de frein à disque, avec une matrice de garniture (2), d'une part, fixée sur une plaque arrière (1) et, d'autre part, une tôle d'amortissement (3) disposée, entre la tôle d'amortissement (3) et la plaque arrière (1) étant prévue au moins une autre tôle (4) avec au moins une ouverture (5),
**caractérisée par le fait**
**que** la tôle d'amortissement (3) et la tôle (4) sont rendues solidaires par collage l'une de l'autre et qu'il est formé, par une pluralité d'ouvertures et par l'assemblage solidaire de la tôle d'amortissement (3) avec la tôle (4), une pluralité d'espaces de réception (6) de produit d'amortissement.

2. Garniture de frein selon la revendication 1, **caractérisée par le fait qu'**une pluralité d'ouvertures (5) dans la tôle (4) servent à recevoir du produit d'amortissement, en particulier de la graisse.

3. Garniture de frein selon la revendication 1 ou 2, **caractérisée par le fait que** la tôle d'amortissement (3) est réalisée sous forme de tôle de recouvrement.

4. Garniture de frein selon au moins l'une des revendications 1 à 3, **caractérisée par le fait que** la tôle (4) assemblée avec la tôle d'amortissement (3) est découplée de manière axiale et/ou radiale par rapport à la plaque arrière (1) .

5. Garniture de frein selon au moins l'une des revendications 1 à 4, **caractérisée par le fait que** la tôle (4) assemblée avec la tôle d'amortissement (3) présente au moins une ouverture de retenue (7) destinée au montage flottant sur la plaque arrière (1).

6. Garniture de frein selon au moins l'une des revendications 1 à 5, **caractérisée par le fait que** les ouvertures (5) sont prévues en forme de fente, horizontalement, verticalement, obliquement, en étoile ou rondes dans la tôle (4).

7. Garniture de frein selon au moins l'une des revendications 1 à 6, **caractérisée par le fait que** la tôle d'amortissement (3) présente au moins un espace de réception (6), orienté vers la plaque arrière (1), destiné à recevoir du produit d'amortissement.
